# EUROPÄISCHE PATENTSCHRIFT

(11) **EP 0 570 786 B1**
(45) Veröffentlichungstag und Bekanntmachung des Hinweises auf die Patenterteilung: **10.04.1996**
(21) Anmeldenummer: 93107512.1
(22) Anmeldetag: 08.05.1993
(51) Int. Cl.: B41F 13/00, F16L 39/04

(54) **Drehübertrager für Druckmaschinen**
Rotating transformer for printing machines
Transformateur rotatif pour machines à imprimer

(30) Priorität: 16.05.1992 DE 4216306
(43) Veröffentlichungstag der Anmeldung: 24.11.1993
(73) Patentinhaber: KOENIG & BAUER-ALBERT Aktiengesellschaft, D-97080 Würzburg (DE)
(72) Erfinder: Schwitzky, Volkmar, D-97076 Würzburg (DE); Stiel, Jürgen, D-97645 Ostheim (DE)

(56) Entgegenhaltungen:
- DE-C- 3 943 119

## Beschreibung

Die Erfindung betrifft einen Drehübertrager zum Einführen eines flüssigen oder gasförmigen Mediums in ein rotierendes Teil einer Druckmaschine.

Durch die DE 39 43 119 C1 ist ein gattungsgemäßer Drehübertrager für Druckluft an Wellenzapfen von Druckmaschinen bekannt, bei welchem die Druckluft in ringförmige Kammern zwischen einer Rotorwelle und einer Gehäusebuchse geleitet wird, wobei die ringförmigen Kammern durch Kugellager mit an den Flanken anliegenden Dichtscheiben getrennt sind. Nachteilig bei diesem Drehübertrager ist jedoch, daß die an den Flanken der Kugellager anliegenden Dichtscheiben auf Grund der Toleranzen der Innen- und Außenringe nicht vollständig abdichten, so daß Druckluft von einer Kammer in eine benachbarte, weniger Druck aufweisende ringförmige Kammer entweichen kann, was unter Umständen zu Fehlschaltungen bei anderen nachfolgenden Einrichtungen führen kann. Darüberhinaus werden bei diesem Drehübertrager bei Bedarf von mehreren ringförmigen Kanälen für die Steuerung der Spanneinrichtungen auch mehrere nebeneinander angeordnete Kugellager eingesetzt, was zu einer Anhäufung von Kugellagern und somit zu einer statischen Überbestimmung der Lagerung des Rotors führt, d. h. daß auf Grund der Summierung der Lagertoleranzen Verspannungskräfte auftreten, die zu einer Beschädigung der Lager führen können.

Der Erfindung liegt die Aufgabe zugrunde, einen die Funktionssicherheit erhöhenden, auch bei einer Vielzahl von Kammern keine statische Überbestimmung aufweisenden Drehübertrager zur Übertragung eines gasförmigen oder flüssigen Mediums auf einen rotierenden Körper zu schaffen, mit einer Mehrzahl voneinander getrennter Zuführungen und nur diesen zugeordneten Abführungen.

Die Aufgabe wird entsprechend dem Kennzeichen des Patentanspruches 1 gelöst.

Bei der Benutzung der Erfindung treten insbesondere nachfolgende Vorteile ein. Die Abdichtung der ringförmigen Druckluftkanäle zueinander, mittels flexibler Dichtlippen, sichert eine separate und störungsfreie Steuerung der Spanneinrichtungen für die Druckplatten auf dem Plattenzylinder oder anderer steuerbarer Einrichtungen. Durch die Anordnung von nur zwei Kugellagern summieren sich die Lagertoleranzen nicht in solcher Höhe, daß schädliche Nebenwirkungen auftreten. Mögliche Fertigungstoleranzen der Kugellager oder Rundlauffehler des Stators oder Rotors werden ebenfalls durch die Anordnung der flexiblen Dichtlippe kompensiert. Die Baulänge des Drehübertragers ist infolge der kompakten Ausbildung der Dichtelemente begrenzt. Beim Leerlauf des des Rotors, d. h. bei nicht druckluftbeaufschlagten ringförmigen Kanälen treten minimale Reibwerte auf. Dies ist von besonderem Vorteil beim kurzzeitigen Schalten und anschließendem, z. T. tagelangem Produktionsbetrieb ohne Veränderungen. Die Dichtlippen stellen sich infolge ihrer Vorspannung bei Verschleißerscheinungen selbsttätig nach. Bei Druckluftbeaufschlagung der Kammern wirkt der für die Reibungswerte in Frage kommende Luftdruck nur auf die Dichtlippe, so daß auch aus dem Grunde nur ein geringer Reibungswiderstand vorhanden ist. Es können auch flüssige Medien, z. B. Hydrauliköl, Verwendung finden.

Die Erfindung soll nachstehend an einem Ausführungsbeispiel näher erläutert werden. Die zugehörigen Zeichnungen zeigen in
- Fig. 1: einen Längsschnitt durch einen erfindungsgemäßen Drehübertrager;
- Fig. 2: den Schnitt II - II nach Fig. 1;
- Fig. 3: die Seitenansicht eines Dichtelementes;
- Fig. 4: den Schnitt IV - IV nach Fig. 3, jedoch mit Rotor;
- Fig. 5: den Schnitt durch eine zweite Ausführungsvariante eines flexiblen Ringes;
- Fig. 6: den Schnitt durch eine Ausführungsvariante der Anordnung von flexiblen Ringen mit Tragteilen und Rotor.

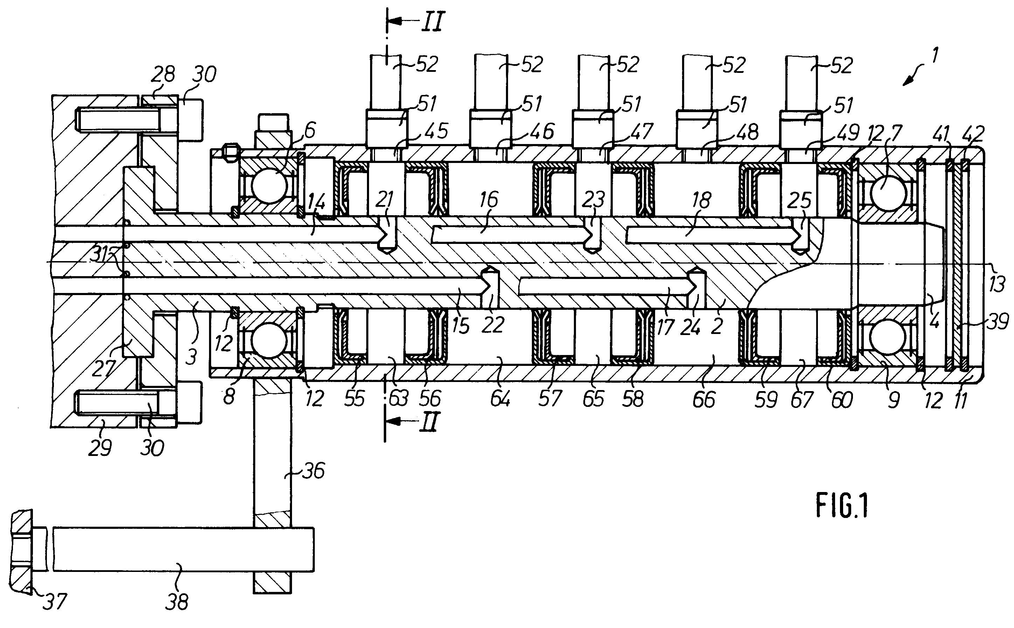

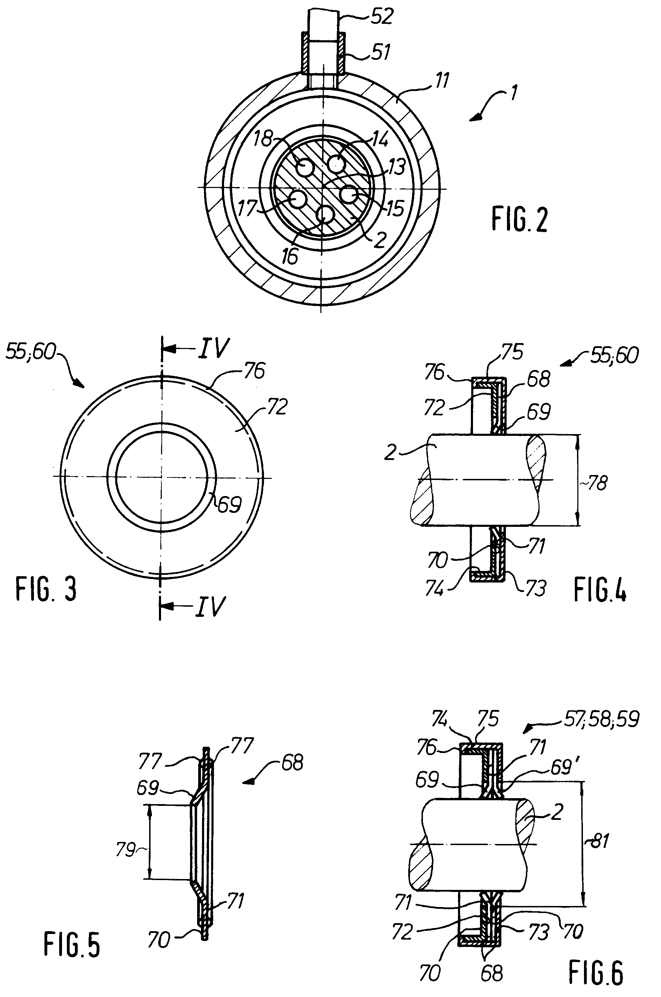

Entsprechend den Fig. 1 und 2 ist ein Drehübertrager, insgesamt mit 1 bezeichnet, einmal im Längsschnitt und einmal im Querschnitt dargestellt. Der Drehübertrager 1 besteht aus einem zylinderförmigen Rotor 2, welcher mit seinen beiden Enden 3; 4 in jeweils einem Kugellager 6; 7 gelagert ist. Das Kugellager 6; 7 stützt sich mit seinem Außenring 8; 9 an der Innenwand eines rohrförmigen Stators 11 ab. Die Kugellager 6; 7 sind mit Sicherungsringen 12 gehalten, die in nicht näher bezeichneten Ringnuten sitzen. Der Rotor 2 weist konzentrisch zu seiner Rotationsachse 13 fünf parallel verlaufende Längsbohrungen 14 bis 18 auf, die vom ersten Ende 3 des Rotors 2 her beginnend, mit jeweils unterschiedlicher Länge enden und jeweils auf das Ende einer in radialer Richtung des Rotors 2 verlaufende Sacklochbohrung 21 bis 25 stoßen. Die Längsbohrungen 14 bis 18 sowie die Sacklochbohrungen 21 bis 25 sind in Fig. 1 der besseren Anschaulichkeit wegen, abweichend von Fig. 2, alle in einer Schnittebene dargestellt worden. Das erste Ende 3 des Rotors 2 weist einen ringförmigen Flansch 27 auf, der mit einer Haltescheibe 28 auf der Stirnseite eines Achszapfens 29 eines nicht dargestellten Plattenzylinders über Schrauben 30 drehfest verbunden ist. Dabei korrespondieren die Längsbohrungen 14 bis 18 mit in gleicher Art und Weise angeordneten Längsbohrungen im Achszapfen 29, die dann zu den entsprechenden Betätigungsorganen im Plattenzylinder führen. Zwischen dem Flansch 27 des Rotors 2 und der Stirnseite des Achszapfens 29 sind in einem Einstich jeweils Dichtringe 31 angeordnet. Der Stator 11 ist an dem ersten Ende 3 über eine Halteklaue 36 mit einem am Maschinengestell 37 befestigten Zylinderzapfen 38 gegen Verdrehung gesichert.

Am zweiten Ende 4 weist der Stator 11 eine Dichtscheibe 39 auf, die von in Nuten sitzenden Sicherungsringen 41; 42 gehalten werden. Der Stator 11 besitzt zwischen den beiden Kugellagern 6; 7 auf seiner Mantelfläche in achsparalleler Richtung verlaufende Gewindebohrungen 45 bis 49, die Verschraubungen 51 für Druckleitungen 52 aufnehmen.

Jeweils zwischen den in achsparalleler Richtung hintereinander angeordneten Bohrungen 45 bis 49 sind scheibenförmige Dichtelemente 55 bis 60 angeordnet, die zwischen dem Innenmantel des Stators 11 und der Oberfläche des Rotors 2 ringförmige Kammern 63 bis 67 bilden. Dabei korrespondieren die Bohrungen 45 bis 49 jeweils mit den in radialer Richtung im Rotor 2 verlaufenden Sacklochbohrungen 21 bis 25, d. h. Bohrung 45 mit Bohrung 21 usw. Die Dichtelemente 55 bis 60 sind in den Fig. 3 bis 6 näher dargestellt.

Entsprechend Fig. 3 und 4 bestehen die jeweils an den Enden 3; 4 des Rotors 2 eingesetzten Dichtelemente 55; 60 aus einem flexiblen Ring 68 mit einer Dichtlippe 69. Dieser flexible Ring 68 befindet sich mit seinen beiden Seitenflächen 70; 71 zwischen zwei Tragringen 72; 73, so daß nur die Dichtlippe 69 in Richtung der ersten Seitenfläche 70 frei hervorsteht. Beide Tragringe 72; 73 weisen am Außenumfang jeweils einen um 90^{o} abgewinkelten Rand 74; 75 auf. Der flexible Ring 68 sowie der erste Tragring 72 sind in ihrem Außendurchmesser so bemessen, daß beide Ringe 68; 72 an der Innenseite des Randes 75 des zweiten Tragringes 73 anliegen. Der Rand 75 des zweiten Tragringes 73 ist wiederum um weitere 90^{o} gebogen, so daß eine ringförmige Abkantung 76 entsteht, die auf die Stirnseite des Randes 74 des ersten Tragringes 72 drückt. Somit ist der flexible Ring 68 fest eingespannt.

Der flexible Ring 68 kann aus Teflon oder einem anderen hitzebeständigen Kunststoff, und die Tragringe 72; 73 können aus Stahlblech bestehen.

Entsprechend der Darstellung nach Fig. 6 sind die Dichtelemente 57 bis 59, die also nicht wie ein abschließendes Dichtelement 55; 60 am Ende 3; 4 des Rotors 2 angeordnet sind, mit jeweils zwei flexiblen Ringen 68, 68' versehen, die mit ihren zweiten Seitenflächen 71 aufeinanderliegen, so daß die Dichtlippen 69 jeweils in Richtung erster Seitenfläche 70 weisen und somit in das Innere unterschiedlicher Kammern 63 bis 67 weisen.

Es ist auch möglich, den flexiblen Ring 68 nach Fig. 5 an seinen Seitenflächen 70; 71 mit ringförmigen Wülsten 77 zu versehen, um zu verhindern, daß zwischen dem flexiblen Ring 68 und den beiden Tragringen 72; 73 Druckluft durchdringt.

Bei einer Anordnung von zwei flexiblen Dichtringen 68 nach Fig. 6 müssen die ringförmigen Wülste 77 auf der zweiten Seitenfläche 71 des flexiblen Dichtringes 68 entsprechend versetzt angeordnet sein, so daß diese nicht aufeinanderliegen, d. h. es müssen zwei verschiedene Sorten von Dichtringen 68; 68' mit den zweiten Seitenflächen 71 aufeinandergelegt sein (in Fig. 6 dargestellt).

Die Druckluftkanäle, bestehend aus Sacklochbohrungen 21 bis 25 und Längsbohrungen 14 bis 18, werden mit einem Druck von 0,6 bis 0,8 MPa beaufschlagt. Dabei legen sich die Dichtlippen 69 an den Rotor 2 an, so daß keine Luft in andere Kammern entweichen kann. Nach den am Anfang des Betriebszustandes ausgeführten Schaltungen erfolgt eine längere Nichtbeaufschlagung der Kammern, da sich eine z. T. tagelange Produktion eines Artikels anschließt. Die Dichtlippen 69 haben minimale Berührung mit dem Rotor 2, so daß auch keine Erwärmung oder ein hoher Verschleiß in Erscheinung tritt. Der Druckübertrager kann auch mit einem flüssigen Medium betrieben werden.

Die scheibenförmigen Dichtelemente 55 bis 60 sind im Stator eingepreßt oder sie können auch mit einem entsprechenden Kleber oder einem klebenden Dichtmittel im Stator 11 befestigt sein.

Der Innendurchmesser 79 des inneren Kreisringes bzw. der Dichtlippe 69 ist in unmontiertem Zustand kleiner als der Durchmesser 78 des zu umschließenden Rotors 2. Die Dichtlippe 69 umschließt den Rotor 2 dichtend und ist in Richtung Kammerinnerem abgebogen. Der flexible Ring 68; 68' besteht aus einem temperaturbeständigen und einen niedrigen Reibungskoeffizienten aufweisenden Material, z. B. Polytetrafluorethylen (PTFE).

Es ist auch vorteilhaft, das gesamte Dichtelement 55 bis 60 aus PTFE herzustellen. Es wird dann unterschieden zwischen Dichtelementen 55; 60 mit einer Dichtlippe 69 für die an das erste 3 oder zweite Ende 4 des Rotors 2 grenzenden Dichtelemente und solchen Dichtelementen 57 bis 59, die zwei Dichtlippen 69; 69' aufweisen, für die dazwischenliegenden Dichtelemente nach Fig. 1.

### Teileliste

- 1: Drehübertrager
- 2: Rotor (1)
- 3: Ende, erstes (2)
- 4: Ende, zweites (2)
- 5: -
- 6: Kugellager (1)
- 7: Kugellager (1)
- 8: Außenring (6)
- 9: Außenring (7)
- 10: -
- 11: Stator
- 12: Sicherungsring
- 13: Rotationsachse
- 14: Längsbohrung
- 15: Längsbohrung
- 16: Längsbohrung
- 17: Längsbohrung
- 18: Längsbohrung
- 19: -
- 20: -
- 21: Sacklochbohrung (14)
- 22: Sacklochbohrung (15)
- 23: Sacklochbohrung (16)
- 24: Sacklochbohrung (17)
- 25: Sacklochbohrung (18)
- 26: -
- 27: Flansch (2)
- 28: Haltescheibe
- 29: Achszapfen
- 30: Schraube
- 31: Dichtring
- 32: -
- 33: -
- 34: -
- 35: -
- 36: Halteklaue
- 37: Maschinengestell
- 38: Zylinderzapfen
- 39: Dichtscheibe
- 40: -
- 41: Sicherungsring
- 42: Sicherungsring
- 43: -
- 44: -
- 45: Gewindebohrung
- 46: Gewindebohrung
- 47: Gewindebohrung
- 48: Gewindebohrung
- 49: Gewindebohrung
- 50: -
- 51: Verschraubung
- 52: Druckleitung
- 53: -
- 54: -
- 55: Dichtelement
- 56: Dichtelement
- 57: Dichtelement
- 58: Dichtelement
- 59: Dichtelement
- 60: Dichtelement
- 61: -
- 62: -
- 63: Kammer, ringförmig
- 64: Kammer, ringförmig
- 65: Kammer, ringförmig
- 66: Kammer, ringförmig
- 67: Kammer, ringförmig
- 68: Ring, flexibel
- 68': Ring, flexibel
- 69: Dichtlippe (68)
- 69': Dichtlippe (68)
- 70: Seitenfläche (68)
- 71: Seitenfläche (68)
- 72: Tragring, erster
- 73: Tragring, zweiter
- 74: Rand (72)
- 75: Rand (73)
- 76: Abkantung (75)
- 77: Wulst (68)
- 78: Durchmesser (2)
- 79: Innendurchmesser (69) unmontiert
- 80: -
- 81: Bohrung / Innendurchmesser (72; 73)

## Patentansprüche

1. Drehübertrager (1) zum Einführen eines flüssigen oder gasförmigen Mediums in ein rotierendes Teil einer Druckmaschine, insbesondere über die Stirnfläche eines Lagerzapfens (29) einer Walze oder eines Zylinders, wobei der Drehübertrager aus einem mit dem Lagerzapfen verbundenen Rotor (2) und einem verdrehfesten Stator (11) besteht und pro zu übertragendem Kanal (14 bis 18) zwischen Rotor und Stator durch axial voneinander beabstandete Dichtungen (55 bis 60) ringförmige Kammern (63 bis 67) gebildet werden, die über Bohrungen (45 bis 49) im Stator druckbeaufschlagbar sind und die Weiterleitung des Mediums aus diesen ringförmigen Kammern durch Bohrungen (21 bis 25) im Rotor zum Lagerzapfen der Walze oder des Zylinders erfolgt, dadurch gekennzeichnet, daß die Dichtungen (55 bis 60) aus Dichtelementen (55 bis 60) bestehen, die jeweils einen äußeren Stützkreisring (72; 73) und zumindest einen angeformten, als Dichtlippe (69, 69') ausgebildeten inneren flexiblen Kreisring (68, 68') mit geringerer Dicke aufweisen, daß der äußere Stützkreisring (72; 73) am Stator (11) dicht anliegt, daß der Innendurchmesser (79) des innereren Kreisringes (68) in unmontiertem Zustand kleiner ist als der Durchmesser (78) des zu umschließenden Rotors (2), daß die Dichtlippe (69) in montiertem Zustand in Richtung des ihr zugeordneten Kammerinneren (63 bis 67) abgebogen ist und den Rotor (2) dichtend umschließt.

2. Drehübertrager nach Anspruch 1, dadurch gekennzeichnet, daß der äußere Stützkreisring (72; 73) aus einem ersten Tragring (72) und einem zweiten Tragring (73) besteht, daß zwischen den Tragringen (72; 73) ein flexibler Ring (68) angeordnet ist, welcher mit seiner Dichtlippe (69) in eine Bohrung (81) der Tragringe (72; 73) hineinragt.

3. Drehübertrager nach Anspruch 1 und 2, dadurch gekennzeichnet, daß das Dichtelement (57; 58; 59) zwei flexible Ringe (68) aufnimmt, deren jeweils zweite Seitenflächen (71) aufeinander angeordnet sind, daß die Dichtlippen (69; 69') voneinander entgegengesetzt gerichtet sind und in Richtung der ersten Seitenflächen (70) und somit in das Innere unterschiedlicher Kammern (63 bis 67) weisen.

4. Drehübertrager nach Anspruch 1 bis 3, dadurch gekennzeichnet, daß der flexible Ring (68) auf beiden Seitenflächen (70; 71) ringförmige, konzentrisch angeordnete Wülste (77) aufweist.

5. Drehübertrager nach Anspruch 1 bis 4, dadurch gekennzeichnet, daß der flexible Ring (68) aus einem temperaturbeständigen und einen niedrigen Reibungskoeffizienten aufweisenden Material, z. B. Polytetrafluorethylen, besteht.

6. Drehübertrager nach Anspruch 1 und 5, dadurch gekennzeichnet, daß der äußere Stützkreisring (72; 73) und der als Dichtlippe (69) fungierende innere flexible Kreisring (68) einstückig ausgebildet ist, und aus Polytetrafluorethylen besteht.

7. Drehübertrager nach Anspruch 1 und 6, dadurch gekennzeichnet, daß das Dichtelement (57 bis 59) zwei entgegengesetzt abgebogene Dichtlippen (69; 69') aufweist, die jeweils in das Innere unterschiedlicher Kammern (63 bis 67) gerichtet sind.

## Claims

1. Rotating transmitter (1) for introducing a liquid or gaseous medium into a rotating part of a printing machine, in particular via the end face of a bearing journal (29) of a roller or a cylinder, the rotating transmitter comprising a rotor (2) connected to the bearing journal and a stator (11) fixed against rotation, and, per channel (14 to 18) to be transmitted [sic], annular chambers (63 to 67) being formed between rotor and stator by seals (55 to 60) axially spaced apart from one another and capable of being subjected to pressure via bores (45 to 49) in the stator, and the medium being conveyed from these annular chambers through bores (21 to 25) in the rotor to the bearing journal of the roller or the cylinder, characterised in that the seals (55 to 60) comprise sealing elements (55 to 60), in each case having an outer supporting circular ring (72; 73) and at least one integral inner flexible circular ring (68, 68') of lesser thickness constructed as a sealing lip (69, 69'), in that the outer supporting circular ring (72; 73) lies tightly against the stator (11), in that the inside diameter (79) of the inner circular ring (68) in the unmounted state is smaller than the diameter (78) of the rotor (2) to be enclosed, in that the sealing lip (69) in the mounted state is bent off in the direction of the chamber interior (63 to 67) associated with it and sealingly encloses the rotor (2).

2. Rotating transmitter according to Claim 1, characterised in that the outer supporting circular ring (72; 73) comprises a first carrying ring (72) and a second carrying ring (73), in that between the carrying rings (72; 73) there is arranged a flexible ring (68) which, with its sealing lip (69), projects into a bore (81) of the carrying rings (72; 73).

3. Rotating transmitter according to Claim 1 and 2, characterised in that the sealing element (57; 58; 59) receives two flexible rings (68), the second side faces (71) of which are in each case arranged one upon the other, in that the sealing lips (69; 69') are directed oppositely from one another and point in the direction of the first side faces (70) and thus into the interior of different chambers (63 to 67).

4. Rotating transmitter according to Claim 1 to 3, characterised in that the flexible ring (68) has annular, concentrically arranged beads (77) on both side faces (70; 71).

5. Rotating transmitter according to Claim 1 to 4, characterised in that the flexible ring (68) consists of a material which is heat-resistant and exhibits a low coefficient of friction, e.g. polytetrafluoroethylene.

6. Rotating transmitter according to Claim 1 and 5, characterised in that the outer supporting circular ring (72; 73) and the inner flexible circular ring (68) serving as a sealing lip (69) is constructed in one piece and consists of polytetrafluoroethylene.

7. Rotating transmitter according to Claim 1 and 6, characterised in that the sealing element (57 to 59) has two oppositely bent-off sealing lips (69; 69'), in each case directed into the interior of different chambers (63 to 67).

## Revendications

1. Transmetteur rotatif (1) pour introduire un milieu liquide ou gazeux dans une partie rotative d'une machine à imprimer, en particulier par la face frontale d'un tourillon d'appui (29) d'un rouleau ou d'un cylindre, ce transmetteur rotatif étant constitué d'un rotor (2) relié au tourillon d'appui et d'un stator (11) immobilisé en rotation, des chambres annulaires (63 à 67) étant formées pour chaque canal de transmission (14 à 18) entre le rotor et le stator par des joints (55 à 60) distants axialement les uns des autres et pouvant être mises en pression par l'intermédiaire de trous (45 à 49) pratiqués dans le stator, et le milieu étant transféré de ces chambres annulaires au tourillon d'appui du rouleau ou du cylindre par l'intermédiaire de trous (21 à 25) pratiqués dans le rotor, caractérisé en ce que les joints (55 à 60) sont constitués par des éléments d'étanchéité (55 à 60) comportant chacun un anneau d'appui extérieur (72 ; 73) et, solidarisé à eux, au moins un anneau souple intérieur (68, 68') de moindre épaisseur en forme de lèvre d'étanchéité (69, 69'), en ce que l'anneau d'appui extérieur (72 ; 73) est appliqué de manière étanche contre le stator (11), en ce qu'en position non montée le diamètre intérieur (79) de l'anneau intérieur (68) est plus petit que le diamètre (78) du rotor (2) qu'il entoure, et en ce qu'en position montée la lèvre d'étanchéité (69) est repliée en direction de l'intérieur de la chambre correspondante (63 à 67) et entoure le rotor (2) de manière étanche.

2. Transmetteur rotatif selon la revendication 1, caractérisé en ce que l'anneau d'appui extérieur (72 ; 73) est constitué d'un premier anneau de support (72) et d'un second anneau de support (73), en ce qu'entre les anneaux de support (72 ; 73) est disposé un anneau souple (68) dont la lèvre d'étanchéité (69) pénètre dans un perçage (81) des anneaux de support (72 ; 73).

3. Transmetteur rotatif selon les revendications 1 et 2, caractérisé en ce que l'élément d'étanchéité (57 ; 58 ; 59) abrite deux anneaux souples (68) appliqués l'un contre l'autre par leurs deuxièmes surfaces latérales respectives (71), et en ce que les lèvres d'étanchéité (69 ; 69') sont dirigées à l'opposé l'une de l'autre et sont tournées vers les premières surfaces latérales (70) et donc vers l'intérieur de chambres différentes (63 à 67).

4. Transmetteur rotatif selon les revendications 1 à 3, caractérisé en ce que, sur ses deux surfaces latérales (70 ; 71), l'anneau souple (68) comporte des bourrelets annulaires concentriques (77).

5. Transmetteur rotatif selon les revendications 1 à 4, caractérisé en ce que l'anneau souple (68) est réalisé dans un matériau résistant à la chaleur et à faible coefficient de friction, par exemple en polytétrafluoroéthylène.

6. Transmetteur rotatif selon les revendications 1 et 5, caractérisé en ce que l'anneau d'appui extérieur (72 ; 73) et l'anneau souple intérieur (68) faisant fonction de lèvre d'étanchéité (69) sont conçus d'une seule pièce et réalisés en polytétrafluoroéthylène.

7. Transmetteur rotatif selon la revendication 1 à 6, caractérisé en ce que l'élément d'étanchéité (57 à 59) comporte deux lèvres d'étanchéité (69 ; 69') qui sont repliées à l'opposé l'une de l'autre et qui sont chacune dirigées vers l'intérieur de chambres différentes (63 à 67).
